# EUROPEAN PATENT SPECIFICATION

(11) **EP 1 017 958 B1**
(45) Date of publication and mention of the grant of the patent: **02.05.2002**
(21) Application number: 97936256.3
(22) Date of filing: 30.07.1997
(51) Int. Cl.: F27B 7/20, C04B 7/43

(54) **OXYGEN ENRICHMENT OF CEMENT KILN SYSTEM COMBUSTION**
VERBRENNUNGS-SAUERSTOFFANREICHERUNG IN ZEMENTOFEN-SYSTEMEN
ENRICHISSEMENT EN OXYGENE DE COMBUSTION DANS DES SYSTEMES DE FOUR A CIMENT

(43) Date of publication of application: 12.07.2000
(73) Proprietor: Southdown, Inc., Houston, TX 77002 (US)
(72) Inventor: TSENG, Herman, H., Houston, TX 77079 (US); ALSOP, Philip, A., Houston, TX 77006 (US)
(74) Representative: Schmitz, Jean-Marie
(86) International application number: US9713231
(87) International publication number: WO9906778

(56) References cited:
- WO-A-83/03601
- DE-A- 3 522 883
- DE-B- 1 153 312
- FR-A- 2 280 601
- US-A- 4 187 071
- US-A- 4 560 412
- T.FUJISAWA: "Neue Technologie zum Zementbrennen." ZKG INTERNATIONAL, vol. 42, no. 10, 1 October 1989, WIEBADEN, pages 510-514, XP000080337

## Description

This invention generally pertains to the field of Portland cement manufacturing and, more particularly, to the combustion process in Portland cement manufacturing.

The present invention relates to a method of making cement clinker according to the preamble of claim 1 and an apparatus for improving combustion according to the preamble of claim 15.

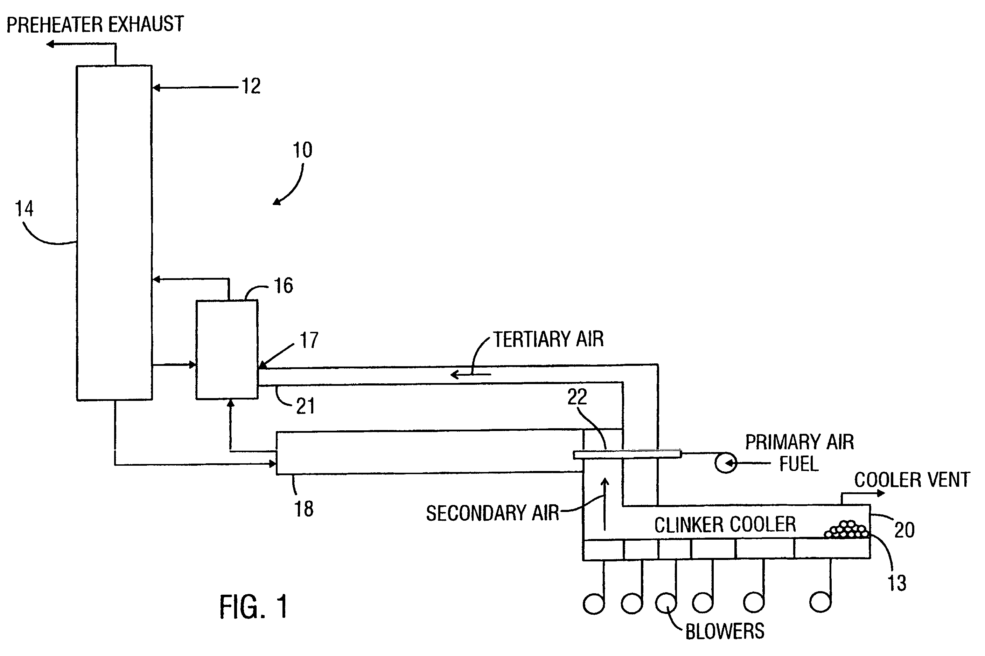

The Portland cement manufacturing process has, in its most general form, long been established. As shown in Figure 1, a raw feed material 12 is fed into a cement kiln system 10 . wherein it is heated until it calcines and transforms into a material 13 known as "cement clinker" or "clinker." More particularly, the raw feed material 12 is fed into the cyclone preheater 14. The preheater 14 heats the raw feed 12 to a temperature ready for calcination and then passes the preheated feed 12 to the precalciner 16. The precalcined feed 12 then . enters the rotary kiln 18 wherein it is transformed into the clinker 13 that is deposited in clinker cooler 20.

The calcination reaction in the precalciner 16 takes place at a relatively narrow temperature range of about 815-871°C (1500 to 1600°F). The heat for calcination is provided by the flameless combustion of fuel injected at point 17 of the precalciner 16 and the preheated feed 12 can reach over 90% calcination before entering the rotary kiln 18. The residual carbonate is calcined in the rotary kiln 18, where the temperature of the calcined feed 12 is raised to a clinkering temperature of about 1460°C (2650°F) by firing a mixture of fuel and air by kiln burner 22. At the clinkering temperature, approximately 25% of the hot meal is liquefied and, to reach the clinkering temperature, a flame temperature of over 1930°C (3500°F) is required.

The tumbling action of the rotary kiln forms the partially liquefied feed into clinker nodules 13 that drop into the clinker cooler 20, where they cool and are taken for pulverization. The air in the clinker cooler 20 cools the clinker 13 by absorbing heat therefrom and the air is thereby heated. This heated air is recycled into the rotary kiln 18 as "secondary air" to support the combustion therein and into the precalciner 16 via a tertiary air duct 21 as "tertiary air."

In the late 1950's and 1960's, prior to the development of the precalciner, the industry began experimenting with oxygen enrichment of kiln combustion as a potential refinement. Martin J. La Velle, in 1959, suggested such in "Oxygen Enrichment of Primary Air Can Improve Kiln Production," published in the journal *Rock Products*, but no practical application is known. Oxygen enrichment of secondary air has been practiced on several occasions. A report by Robert A. Gaydos, entitled "Oxygen Enrichment of Combustion Air in Rotary Kiln," published by the Portland Cement Association, indicated that oxygen enrichment could improve kiln production.

One common method of oxygen enrichment for a rotary kiln is to place an oxygen lance in between kiln burner 22 and the feed 12 in the rotary kiln 18. Oxygen is injected through the lance of the burner 22 at a certain tip velocity. Since the underside of the flame in contact with pure oxygen will exhibit high flame temperature, the oxygen lance is placed so that excessive flame temperature will not impact refractory and kiln coating. The drawbacks of this practice are many: (1) oxygen lance is subject to high temperature, (2) proper direction and velocity of oxygen jet is critical, (3) high flame temperature promotes increased NOx formation, and (4) high flame temperature may adversely impact refractory life.

The precalciner 16 also contains a firing point, which firing point can be equipped with multiple burners. The preheated feed 12 entering the precalciner 16 is suspended and calcined in the vessel thereof. The fuel injected at point 17 supplies the heat necessary to dissociate carbon dioxide from limestone in the feed 12. The combustion air is primarily supplied as tertiary air from the clinker cooler 20 through the tertiary air duct 21. Due to the large amount of limestone powder present, the feed 12 undergoes an endothermic reaction in the precalciner vessel and the combustion is flameless. Oxygen enrichment in the precalciner has a reduced risk to refractory life or to increased NOₓ formation, mainly due to the low temperature combustion.

However, a major deterrent to oxygen enrichment in cement kiln systems has always been the cost of oxygen. Some reports have also indicated technical concerns arising from oxygen enrichment in the kiln, such as refractory life, burning zone shift and coating stability. Thus, despite the optimistic tenor of some experimental reports and even though it is commonly used in lime kilns, oxygen enrichment in cement kiln systems never became a common practice because of a variety of technological and economic considerations.

By contrast, so far as is known, nobody has attempted oxygen enrichment of combustion in the precalciner. One authority in the field, Kurt E. Peray in *The Rotary Kiln* (2nd ed. 1985), has suggested this specifically for precalciners without tertiary air ducts or for "air through" systems in order to reduce the excess air drawn through the kiln, but admits not knowing of any previous attempts and makes no mention of oxygen enrichment in systems using a tertiary air duct. Further, Peray admits that "[t]his idea would require research before deciding whether or not it could be feasibly implemented." *Id*., at p. 75. However, after approximately 12 years, nobody in the industry has reported such an experiment and certainly there are no known successful attempts.

FR-A-7523176 discloses improvements in the apparatus for calcining powdered cement material and removing nitrogen oxides from the entire exhaust gases from the burning equipment. The apparatus comprises making the most of the sensible heat and fluidity of the cement material preheated by the burning equipment and using the material as a catalyst for diffusing and vaporizing the fuel, thereby producing reducing gases, and then bringing the reducing gases into contact with combustion gases from the kiln for stepwise combustion.

WO 83/03601 discloses a process for producing cement clinker, having a preheating-, calcination and cooling zone, under addition of a secondary fuel, (retardedly) combustible components such as waste materials and/or conventional fuels being added in the zone between kiln inlet and calcination zone and then being subjected to an incomplete combustion and/or pyrolysis under addition of exhaust gases from the burning process.. The gases thus formed are introduced into the calcination zone as secondary combustion gas together with the exhaust gas from the burning process and are burned there with tertiary air and optionally with conventional secondary fuel. The plant required for performing the process consists of a system of heat exchangers , a calcining kiln , a burning kiln and a clinker cooler.

Thus, it is desirable to develop a cement manufacturing; process with higher productivity than is otherwise available from existing pyroprocessing equipment. It would also be desirable to avoid the disadvantages of traditional introduction of oxygen to the kiln burner.

The method of making cement clinker is defined in the characterizing portion of claim 1, the apparatus for improving combustion is defined in the characterizing portion of claim 15.

The invention in its various embodiments includes a method and an apparatus for improving combustion in a cement kiln system. The method in one embodiment comprises enriching the tertiary air stream to the precalciner of a cement kiln system with oxygen. The apparatus in one embodiment comprises a precalciner and an oxygen source coupled to the precalciner.

A more particular description of the invention briefly summarized above is set forth below by way of particular embodiments disclosed in the drawings of this specification and as described in connection therewith. The drawings nevertheless illustrate only typical, particular embodiments of the invention and are not to be considered limiting thereon as the invention may admit to other equally effective embodiments. In the drawings:
Figure 1 schematically illustrates a conventional cement manufacturing kiln system having a precalciner such as is known in the prior art;
Figure 2 schematically illustrates a cement manufacturing kiln system constructed in accordance with the invention, and illustrating several alternative embodiments for interfacing an oxygen source to the kiln;
Figure 3 details an oxygen supply apparatus generally illustrated in Figure 2; and
Figures 4A-4C detail three alternative embodiments to interface a source of oxygen for the kiln in Figure 2.

Numerous specific details are set forth below in the detailed description of particular embodiments to provide a thorough understanding of the present invention. However, one of ordinary skill in the art having the benefit of this disclosure will understand that the present invention may be practiced without many of the details presented since such details will be necessary or useful depending on the particular embodiment being employed. Conversely, in other instances, well known details have not been described for the sake of clarity so as not to obscure the invention. It will be appreciated that supplying such details would be a routine undertaking for those of ordinary skill in the art, even if a complex and time-consuming task, given the benefit of this disclosure.

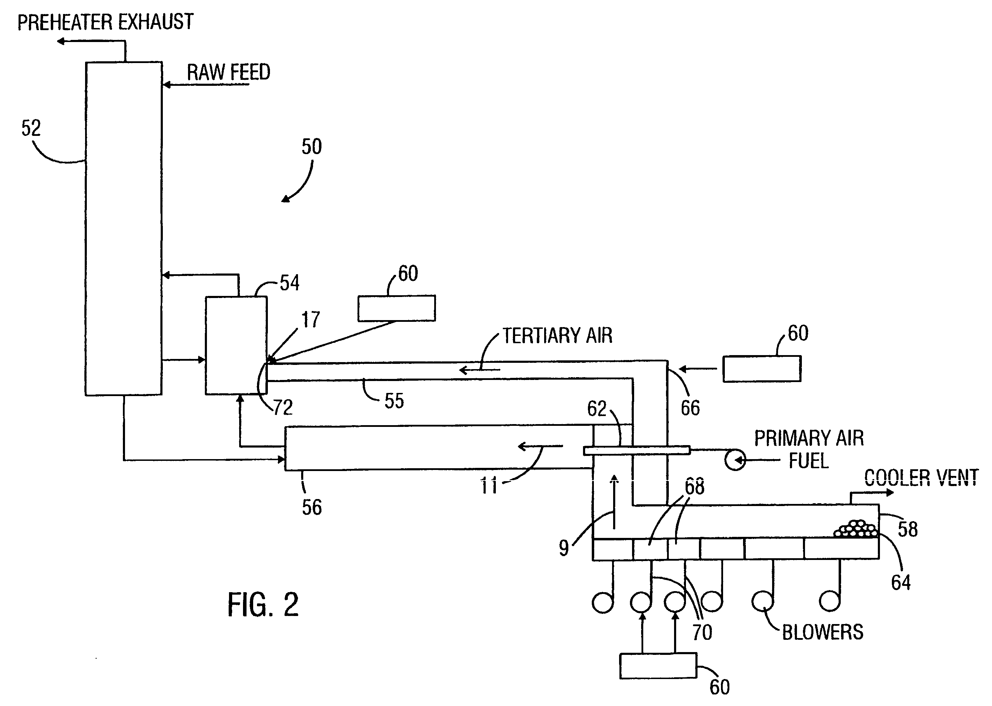

Figure 2 illustrates a cement manufacturing kiln system 50 constructed in accordance with one embodiment of the invention. The kiln system 50 generally comprises a cyclone preheater 52, a precalciner 54 equipped with a tertiary air duct 55 and coupled to the preheater 52, a rotary kiln 56 coupled to the precalciner 54, and a clinker cooler 58 coupled to the rotary kiln 56. The preheater 52 of the embodiment illustrated in Figure 2 is a four-stage preheater, but other embodiments may employ, for instance, a single stage preheater. The precalciner 54 partially calcines the preheated feed material 12. As used herein, the term "precalcination" shall refer to that portion of the calcination process occurring prior to the feed material entering the rotary kiln 56 and the term "precalcined feed material" shall refer to the feed material partially calcined before it enters the rotary kiln 56. As is known in the art, the main burner 62 provides heat in the rotary kiln 56 to produce the clinker 64. The combustion air required to completely combust the fuel 17 comes in the form of primary air 11 and secondary air 9.

As shown in Figure 2 and in accordance with the invention, oxygen enrichment of combustion in the precalciner can be accomplished in at least three locations. Oxygen can be introduced from oxygen source 60:
(a) at the tertiary air take-off 66 near the kiln burner platform (not shown), which is conveniently situated for operator supervision and where tertiary air duct 55 provides sufficient retention time for mixing;
(b) into the clinker cooler 58 at the second part of the recuperating zone 68 via proper air ducts 70 of the clinker cooler blowers, whereupon the oxygen from the source 60 may be preheated to improve the thermal efficiency; and
(c) at a point 72 proximate the precalciner burner(s).
Oxygen source 60 provides gaseous oxygen from a cryogenic source, from a vacuum swing adsorption installation, or from any other oxygen production system as may be suitable depending on the quantity of usage, duration of usage and other economy considerations.

Note that oxygen source 60 provides a gas having an oxygen content greater than that of the ambient atmosphere. Thus, for example, clinker cooler 20 of the cement kiln system 10 of Figure 1 is not an "oxygen source" as that term is used herein. However, sources providing a gas at 90% oxygen content or greater are preferred although concentrations even as low as 50% may be highly desirable in some embodiments.

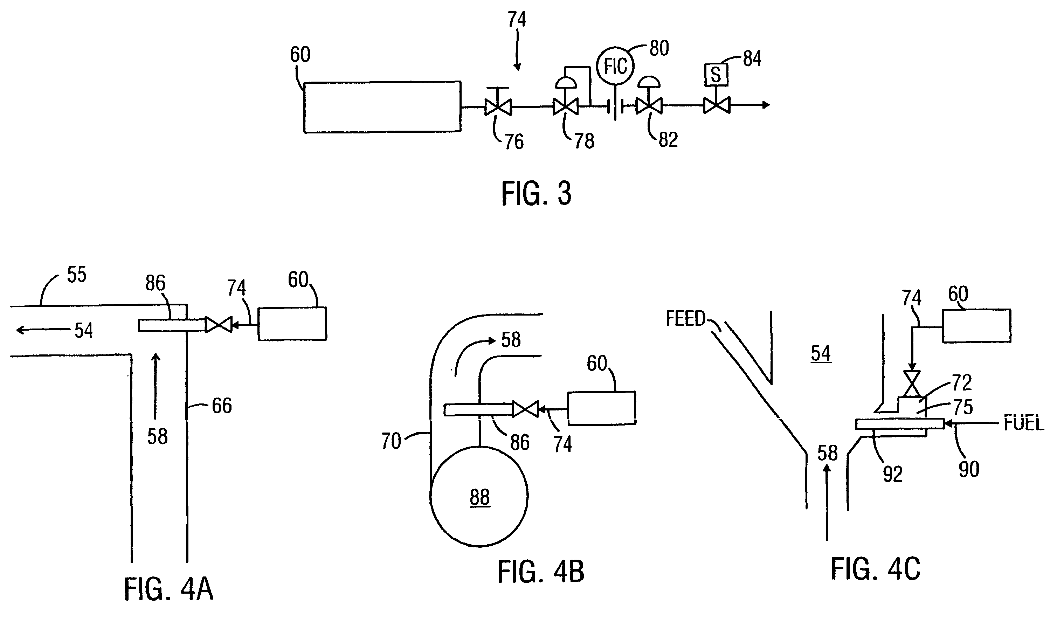

Figure 3 details the oxygen apparatus 74 by which oxygen source 60 interfaces with the kiln system 50. The oxygen supply apparatus 74 is a valve train comprising a block valve 76, a pressure regulator 78, a flow measuring device 80 with an indicator and a controller, a flow control valve 82, and a safety shut off valve 84, all as are known to those in the art. The same valve train comprising the embodiment of Figure 3 may be used for each of the embodiments disclosed herein but the invention is not so limited. Other valve trains as may be suitable for this purpose may be employed instead.

Figure 4A details the interface between oxygen source 60 and kiln system 50 in the embodiment wherein oxygen is introduced at the tertiary air take-off 66. Gaseous oxygen flows from oxygen source 60 through oxygen supply apparatus 74, to oxygen nozzle 86 through which it is introduced into tertiary air duct 55 and tertiary air take-off 66. The nozzle size of oxygen nozzle 86 is determined by the oxygen pressure and flow rate in a manner that will be apparent to those versed in the art having the benefit of this disclosure. In one particular embodiment, oxygen nozzle 86 is a lance such as is used for oxygen enrichment in a lime kiln.

Figure 4B details the interface between oxygen source 60 and kiln system 50 in the embodiment wherein oxygen is introduced into the clinker cooler 58 at the second part of the recuperating zone 68 via proper air duct(s) 70 of the clinker cooler blowers (shown in Figure 2). Oxygen nozzle 86 in this embodiment is connected to the discharge duct 70 of a cooler fan 88. As shown in Figure 2, this embodiment may be deployed using multiple clinker cooler blowers. Due to a usually short duct run, the oxygen nozzle 86 can be perforated to facilitate mixing in this embodiment. A suitable cooler fan duct shall be selected for the oxygen injection so that the added oxygen is not wasted through the cooler vent (shown in Figure 2) on one end and only a minimal amount of oxygen is directed into secondary air.

Figure 4C details the interface between oxygen source 60 and kiln system 50 when oxygen is introduced at a point 72 proximate the precalciner burner 90. Because of the close proximity between the oxygen introduction and the precalciner, oxygen is introduced in this particular embodiment into a chamber 75 to mix with air therein before the introduction. There is no need for a chamber such as the chamber 75 in the embodiments of Figures 4A and 4B because the distance the oxygen and tertiary air must travel through the tertiary air duct 55 to reach the precalciner 54 provides ample opportunity for the oxygen and air to mix.

Returning now to Figure 2, the operation of kiln system 50 is the same as for conventional kilns such as that illustrated in Figure 1 with the exception for oxygen enrichment as noted immediately below. The commencement of oxygen enrichment begins once the pyrosystem stabilizes under normal operations. The oxygen introduction may be broken into several parts. At each part of the process, the fuel to the precalciner 54 is adjusted to maintain a desired excess oxygen level in the precalciner 54. Kiln feed can be added to maintain proper temperature in a manner well known to the art. Limitations of the system should be closely observed, such as cooler vent capacity, kiln feed capacity, fuel limitation, clinker temperature and other temperature limitations. In one particular embodiment employing a single stage precalciner kiln, yields of 3.5 tons of clinker per ton of oxygen was obtained using oxygen rates as high as 25% of stochiometric requirement to combust the fuel in the precalciner 54.

Oxygen enrichment in accord with the invention as set forth above increases heat input for a given combustion gas flow, though in some configurations oxygen at ambient temperatures is substituted for preheated tertiary air. Thus, it can be seen that the present invention possesses numerous desirable characteristics. First, precalciner combustion is low temperature and flameless so that risk of damage to refractories is reduced and increases in thermal NOₓ are avoided and do not artificially limit the addition rate of the oxygen. Second, injection is simple. Adding oxygen to a tertiary duct close to the clinker cooler take-off ensures adequate mixing before entering the precalciner vessel. (In contrast, oxygen enrichment of the main kiln burner requires optimal lance position and injection velocity to assure satisfactory flame conditions.) Third, the oxygen enrichment can be used selectively on an as-needed basis to increase production capacity. Lastly, oxygen enrichment as disclosed above is typically a cost effective alternative to conventional high capital cost equipment modifications and can be implemented faster than equipment modifications.

## Claims

1. A method of making cement clinker (64) in a cement kiln system (50), **characterized in that** said kiln system has a precalciner (54) receiving a tertiary air stream, said method comprising the step of enriching said tertiary air stream with oxygen.

2. The method of claim 1, **characterized in that** the tertiary air is drawn from an air source.

3. The method of claim 2, **characterized in that** the tertiary air stream is enriched at the point where the tertiary air stream is drawn from the clinker cooler (58).

4. The method of claim 2, **characterized in that** the tertiary air stream is enriched by introducing the oxygen through the air source.

5. The method of claim 2, **characterized in that** oxygen comprises approximately 25% of the stoichiometric requirement to combust the precalciner fuel (17).

6. The method of claim 2, **characterized in that** oxygen comprises less than 25% of the stoichiometric requirement to combust the precalciner fuel (17).

7. The method of claim 1, **characterized in that** oxygen comprises approximately 25% of the stoichiometric requirement to combust the precalciner fuel (17).

8. The method of claim 1, **characterized in that** oxygen comprises less than 25% of the stoichiometric requirement to combust the precalciner fuel (17).

9. The method of claim 1, **characterized in that** enriching the tertiary air stream includes receiving oxygen from an oxygen source (60).

10. The method of claim 9, **characterized in that** receiving oxygen from the oxygen source (60) includes receiving air from at least one of a source of cryogenic oxygen and a vacuum swing adsorption installation.

11. The method of claim 1, **characterized in that** receiving tertiary air stream is enriched at a point proximate the precalciner (54).

12. A method of making cement clinker (64) according to anyone of the claims 1 to 11, **characterized in that** before the step of enriching said tertiary air stream with oxygen it further comprises the steps of preheating a feed material and precalcining the feed material, and after said enrichment with oxygen the calcined feed material is transformed into clinker (64).

13. The method of claim 12, **characterized in that** the tertiary air is enriched at a point proximate the precalciner burners (90).

14. A method of making cement clinker (64) according to claim 12, **characterized in that** enriching the tertiary air stream with oxygen comprises the steps of:
drawing tertiary air from an air source including a clinker cooler (58);
receiving oxygen from an oxygen source (60) including at least one source of cryogenic oxygen and a vacuum swing adsorption installation; and
mixing the oxygen with the tertiary air such that the oxygen enriching the tertiary air will comprise up to 25% of the stoichiometric requirement to combust the precalciner fuel (17) when introduced.

15. An apparatus for improving combustion in a cement kiln system (50), **characterized in that** the apparatus comprises:
a precalciner (54);
a tertiary air source; and
an oxygen source coupled to the precalciner (54).

16. The apparatus of claim 15, **characterized in that** the oxygen source is coupled to at least one of the precalciner (54) and the tertiary air source by a valve train.

17. The apparatus of claim 15, **characterized in that** the oxygen source is coupled to the precalciner (54) at a point proximate the precalciner's burner (90).

18. The apparatus of claim 17, **characterized in that** the oxygen source is coupled by valve train.

19. The apparatus of claim 15, **characterized in that** the oxygen source is coupled to the precalciner (54) by a duct (55) through which oxygen enriched air may pass.

20. The apparatus of claim 19, **characterized in that** the oxygen source is further coupled to the precalciner (54) by a valve train.

21. The apparatus of claim 15, **characterized in that** it further comprises an air source coupled to the precalciner (54) and to the oxygen source (60).

22. The apparatus of claim 15 or 21, **characterized in that** the oxygen source (60) is at least one of a source of cryogenic oxygen and a vacuum swing adsorption installation.

23. The apparatus of claim 21, **characterized in that** the air source is a clinker cooler (58).

24. The apparatus of claim 21, **characterized in that** it further comprises means for mixing air from the air source and oxygen from the oxygen source (60).

25. The apparatus of claim 21, **characterized in that** the air source is coupled to the oxygen source (60) and the precalciner (54) by a duct (55) through which oxygen enriched air may pass.

26. An apparatus according to anyone of claims 15 to 25, **characterized in that** for improving combustion in a cement kiln system (50), the apparatus comprises:
means for introducing oxygen enriched tertiary air into the precalciner (54).

27. An apparatus according to anyone of claims 15 to 26 used for manufacturing cement, **characterized in that** the apparatus comprises:
a preheater (52);
a precalciner (54) coupled to the preheater (52);
a rotary kiln (56) coupled to the precalciner (54);
a clinker cooler (58) coupled to the rotary kiln (56) and to the precalciner (54).

28. An apparatus according to claim 27 for manufacturing cement, **characterized in that** the apparatus comprises:
means for introducing oxygen enriched air into the precalciner (54);
a source of primary air;

29. An apparatus according to claims 27 and 28 used for manufacturing cement, **characterized in that** the apparatus comprises:
a preheater (52);
a precalciner (54) coupled to the preheater (52);
an oxygen source (60) including at least one of a source of cryogenic oxygen and a vacuum swing adsorption installation;
a rotary kiln (56) coupled to the precalciner (54) ;
an air source including a clinker cooler (58) coupled to the precalciner (54) and to the rotary kiln (56); and
a duct coupling the oxygen source to the precalciner (54) and the air source to the precalciner (54) and to the rotary kiln (56).

30. An apparatus according to claim 29 used for manufacturing cement, **characterized in that** the apparatus comprises:
an oxygen source (60) coupled the precalciner (54).

## Patentansprüche

1. Verfahren zum Herstellen von Zementklinker (64) in einem Zementbrennofensystem (50), **dadurch gekennzeichnet, daß** das Brennofensystem einen Vorkalzinierofen (54) hat, der einen tertiären Luftstrom aufnimmt, wobei das Verfahren umfaßt die Stufe des Anreicherns des tertiären Luftstroms mit Sauerstoff.

2. Verfahren nach Anspruch 1, **dadurch gekennzeichnet, daß** die tertiäre Luft von einer Luftquelle abgezogen wird.

3. Verfahren nach Anspruch 2, **dadurch gekennzeichnet, daß** der tertiäre Luftstrom an dem Punkt angereichert wird, wo der tertiäre Luftstrom von dem Klinkerkühler (58) abgezogen wird.

4. Verfahren nach Anspruch 2, **dadurch gekennzeichnet, daß** der tertiäre Luftstrom durch Einführen des Sauerstoffs durch die Luftquelle angereichert wird.

5. Verfahren nach Anspruch 2, **dadurch gekennzeichnet, daß** Sauerstoff annähernd 25% der stöchiometrischen Anforderung zum Verbrennen des Vorkalzinierofenbrennstoffs (17) umfaßt.

6. Verfahren nach Anspruch 2, **dadurch gekennzeichnet, daß** Sauerstoff weniger als 25% der stöchiometrischer Anforderung zum Verbrennen des Vorkalzinierofenbrennstoffs (17) umfaßt.

7. Verfahren nach Anspruch 1, **dadurch gekennzeichnet, daß** Sauerstoff annähernd 25% der stöchiometrischen Anforderung zum Verbrennen des Vorkalzinierofenbrennstoffs umfaßt.

8. Verfahren nach Anspruch 1, dadurch gekennzeichent, daß Sauerstoff weniger als 25% der stöchiometrischen Anforderung zum Verbrennen des Vorkalzinierofenbrennstoffs (17) umfaßt.

9. Verfahren nach Anspruch 1, **dadurch gekennzeichnet, daß** Anreichern des tertiären Luftstroms Aufnehmen von Sauerstoff aus einer Sauerstoffquelle (60) einschließt.

10. Verfahren nach Anspruch 9, **dadurch gekennzeichnet, daß** Aufnehmen von Sauerstoff aus der Sauerstoffquelle (60) Aufnehmen von Luft aus mindestens einer einer von einer Quelle von kryogenem Sauerstoff und einer Vakuumschwingadsorptionsinstallation einschließt.

11. Verfahren nach Anspruch 1, **dadurch gekennzeichnet, daß** aufnehmender tertiärer Luftstrom an einem Punkt nahe dem Vorkalzinierofen (54) angereichert wird.

12. Verfahren zum Herstellen von Zementklinker (64) nach einem der Ansprüche 1 bis 11, **dadurch gekennzeichnet, daß** vor der Stufe des Anreicherns des tertiären Luftstroms mit Sauerstoff es ferner die Stufen des Vorerhitzens eines Beschickungsmaterials und Vorkalzinierens des Beschickungsmaterials umfaßt, und nach der Anreicherung mit Sauerstoff wird das kalzinierte Beschickungsmaterial in Klinker (64) umgewandelt.

13. Verfahren nach Anspruch 12, **dadurch gekennzeichnet, daß** die tertiäre Luft an einem Punkt nahe den Vorkalzinierofenbrennern (90) angereichert wird.

14. Verfahren zum Herstellen von Zementklinker (64) nach Anspruch 12, **dadurch gekennzeichnet, daß** Anreichern des tertiären Luftstroms mit Sauerstoff die Stufen umfaßt:
Ziehen von tertiärer Luft aus einer Luftquelle, einen Klinkerkühler (58) einschließend,
Aufnehmen von Sauerstoff aus einer Sauerstoffquelle (60), einschließend mindestens eine Quelle von kryogenem Sauerstoff und eine Vakuumschwingadsorptionsinstallation, und
Mischen des Sauerstoffs mit der tertiären Luft, so daß der Sauerstoff, der die tertiäre Luft anreichert, bis zu 25% der stöchiometrischen Anforderung zum Verbrennen des Vorkalzinierofenbrennstoffs (17), wenn eingeführt, umfaßt.

15. Vorrichtung zum Verbessern von Verbrennung in einem Zementbrennofensystem (50), **dadurch gekennzeichnet, daß** die Vorrichtung umfaßt:
einen Vorkalzinierofen,
eine tertiäre Luftquelle und
eine Sauerstoffquelle, gekoppelt an den Vorkalzinierofen (54).

16. Vorrichtung nach Anspruch 15, **dadurch gekennzeichnet, daß** die Sauerstoffquelle an mindestens eines des Vorkalzinierofens (54) und der tertiären Luftquelle durch einen Ventilzug gekoppelt ist.

17. Vorrichtung nach Anspruch 15, **dadurch gekennzeichnet, daß** die Sauerstoffquelle an den Vorkalzinierofen (54) an einem Punkt nahe dem Vorkalzinierofenbrenner (90) gekoppelt ist.

18. Vorrichtung nach Anspruch 17, dadurch gekennzeichent, daß die Sauerstoffquelle durch Ventilzug gekoppelt ist.

19. Vorrichtung nach Anspruch 18, **dadurch gekennzeichnet, daß** die Sauerstoffquelle an den Vorkalzinierofen (54) durch eine Leitung (55), durch die Sauerstoff angereicherte Luft passieren kann, gekoppelt ist.

20. Vorrichtung nach Anspruch 19, **dadurch gekennzeichnet, daß** die Sauerstoffquelle ferner an den Vorkalzinierofen (54) durch einen Ventilzug gekoppelt ist.

21. Vorrichtung nach Anspruch 15, **dadurch gekennzeichnet, daß** sie ferner umfaßt eine Luftquelle, gekoppelt an den Vorkalzinierofen (54) und an die Sauerstoffquelle (60).

22. Vorrichtung nach Anspruch 15 oder 21, **dadurch gekennzeichnet, daß** die Sauerstoffquelle (60) mindestens eines einer Quelle von kryogenem Sauerstoff und einer Vakuumschwingadsorptionsinstallation ist.

23. Vorrichtung nach Anspruch 21, **dadurch gekennzeichnet, daß** die Luftquelle ein Klinkerkühler (58) ist.

24. Vorrichtung nach Anspruch 21, **dadurch gekennzeichnet, daß** sie ferner umfaßt Mittel zum Mischen von Luft aus der Luftquelle und Sauerstoff aus der Sauerstoffquelle (60).

25. Vorrichtung nach Anspruch 21, **dadurch gekennzeichnet, daß** die Luftquelle an die Sauerstoffquelle (60) und den Vorkalzinierofen (54) durch eine Leitung (55) gekoppelt ist, durch die Sauerstoff angereicherte Luft passieren kann.

26. Vorrichtung nach einem von Ansprüchen 15 bis 25, **dadurch gekennzeichnet, daß** zum Verbessern von Verbrennung in einem Zementbrennofensystem (50) die Vorrichtung umfaßt:
Mittel zum Einführen von Sauerstoff angereicherter tertiärer Luft in den Vorkalzinierofen (54).

27. Vorrichtung nach einem von Ansprüchen 15 bis 26, verwendet zum Herstellen von Zement, **dadurch gekennzeichnet, daß** die Vorrichtung umfaßt:
einen Vorerhitzer (52),
einen Vorkalzinierofen (54), gekoppelt an den Vorerhitzer (52),
einen Rotationsbrennofen (56), gekoppelt an den Vorkalzinierofen (54),
einen Klinkerkühler (58), gekoppelt an den Rotationsbrennofen (56) und an den Vorkalzinierofen (54).

28. Vorrichtung nach Anspruch 27 zum Herstellen von Zement, dadurch gekennzeichent, daß die Vorrichtung umfaßt:
Mittel zum Einführen von Sauerstoff angereicherter Luft in den Vorkalzinierofen (54),
eine Quelle von primärer Luft.

29. Vorrichtung nach Ansprüchen 27 und 28, verwendet zum Herstellen von Zement, **dadurch gekennzeichnet, daß** die Vorrichtung umfaßt:
einen Vorerhitzer (52),
einen Vorkalzinierofen (54), gekoppelt an den Vorerhitzer (52),
eine Sauerstoffquelle (60) einschließlich mindestens eines von einer Quelle von kryogenem Sauerstoff und einer Vakuumschwingadsorptionsinstallation,
einen Rotationsbrennofen (56), gekoppelt an den Vorkalzinierofen (54),
eine Luftquelle einschließlich eines Klinkerkühlers (58), gekoppelt an den Vorkalzinierofen (54) und an den Rotationsbrennofen (56), und
eine Leitung, die die Sauerstoffquelle an den Vorkalzinierofen (54) und die Luftquelle an den Vorkalzinierofen (54) und an den Rotationsbrennofen (56) koppelt.

30. Vorrichtung nach Anspruch 29, verwendet zum Herstellen von Zement, **dadurch gekennzeichnet, daß** die Vorrichtung umfaßt:
eine Sauerstoffquelle (60), gekoppelt an den Vorkalzinierofen (54).

## Revendications

1. Procédé de préparation de clinker de ciment (64) dans un système de four à ciment (50), **caractérisé en ce que** ledit système de four à ciment possède un dispositif de précalcination (54) qui reçoit un courant d'air tertiaire, ledit procédé comprenant l'étape consistant à enrichir ledit courant d'air tertiaire avec de l'oxygène.

2. Procédé selon la revendication 1, **caractérisé en ce que** l'air tertiaire est aspiré d'une source d'air.

3. Procédé selon la revendication 2, **caractérisé en ce que** le courant d'air tertiaire est enrichi à l'endroit où le courant d'air tertiaire est aspiré du refroidisseur de clinker (58).

4. Procédé selon la revendication 2, **caractérisé en ce que** le courant d'air tertiaire est enrichi en introduisant l'oxygène à travers la source d'air.

5. Procédé selon la revendication 2, **caractérisé en ce que** l'oxygène comprend approximativement 25 % du besoin stoechiométrique pour brûler le combustible (17) du dispositif de précalcination.

6. Procédé selon la revendication 2, **caractérisé en ce que** l'oxygène comprend moins de 25 % du besoin stoechiométrique pour brûler le combustible (17) du dispositif de précalcination.

7. Procédé selon la revendication 1, **caractérisé en ce que** l'oxygène comprend approximativement 25 % du besoin stoechiométrique pour brûler le combustible (17) du dispositif de précalcination.

8. Procédé selon la revendication 1, **caractérisé en ce que** l'oxygène comprend moins de 25 % du besoin stoechiométrique pour brûler le combustible (17) du dispositif de précalcination.

9. Procédé selon la revendication 1, **caractérisé en ce que** l'enrichissement du courant d'air tertiaire englobe la réception d'oxygène à partir d'une source d'oxygène (60).

10. Procédé selon la revendication 9, **caractérisé en ce que** la réception d'oxygène à partir de la source d'oxygène (60) englobe la réception d'air à partir d'au moins une source choisie parmi le groupe comprenant de l'oxygène cryogénique et une installation d'absorption par oscillation sous vide.

11. Procédé selon la revendication 1, **caractérisé en ce que** le courant d'air tertiaire est enrichi à un endroit proche du dispositif de précalcination (54).

12. Procédé de préparation de clinker de ciment (64) selon l'une quelconque des revendications 1 à 11, **caractérisé en ce que**, avant l'étape d'enrichissement dudit courant d'air tertiaire avec de l'oxygène, il comprend en outre les étapes consistant: à préchauffer une matière d'alimentation et à soumettre la matière d'alimentation à une précalcination, et après ledit enrichissement avec de l'oxygène, la matière d'alimentation calcinée est transformée en clinker (64).

13. Procédé selon la revendication 12, **caractérisé en ce que** l'air tertiaire est enrichi. à un endroit proche des brûleurs (90) du dispositif de précalcination.

14. Procédé de préparation de clinker de ciment 64 selon la revendication 12, **caractérisé en ce que** l'enrichissement du courant d'air tertiaire avec de l'oxygène comprend les étapes consistant à :
aspirer de l'air tertiaire d'une source d'air englobant un refroidisseur de clinker (58) ;
recevoir de l'oxygène à partir d'une source d'oxygène (60) englobant au moins une source choisie parmi le groupe comprenant de l'oxygène cryogénique et une installation d'absorption par oscillation sous vide ; et
mélanger l'oxygène avec l'air tertiaire de telle sorte que l'enrichissement de l'air tertiaire avec de l'oxygène comprend jusqu'à 25 % du besoin stoechiométrique pour brûler le combustible (17) du dispositif de précalcination lors de son introduction.

15. Appareil pour améliorer la combustion dans un système de four à ciment (50), **caractérisé en ce que** l'appareil comprend :
un dispositif de précalcination (54) ;
une source d'air tertiaire ; et
une source d'oxygène couplée au dispositif de précalcination (54).

16. Appareil selon la revendication 15, **caractérisé en ce que** la source d'oxygène est couplée à au moins un élément choisi parmi le groupe comprenant le dispositif de précalcination (54) et la source d'air tertiaire à l'aide d'un train de soupapes.

17. Appareil selon la revendication 15, **caractérisé en ce que** la source d'oxygène est couplée au dispositif de précalcination (54) à un endroit proche du brûleur (90) du dispositif de précalcination.

18. Appareil selon la revendication 17, **caractérisé en ce que** la source d'oxygène est couplée à l'aide d'un train de soupapes.

19. Appareil selon la revendication 18, **caractérisé en ce que** la source d'oxygène est couplée au dispositif de précalcination (54) par un conduit (55) à travers lequel peut passer de l'air enrichi d'oxygène.

20. Appareil selon la revendication 19, **caractérisé en ce que** la source d'oxygène est en outre couplée au dispositif de précalcination (54) par un train de soupapes.

21. Appareil selon la revendication 15, **caractérisé en ce qu'**il comprend en outre une source d'air couplée au dispositif de précalcination (54) et à la source d'oxygène (60).

22. Appareil selon la revendication 15 ou 21, **caractérisé en ce que** la source d'oxygène (60) représente au moins une source choisie parmi le groupe comprenant une source d'oxygène cryogénique et une installation d'absorption par oscillation sous vide.

23. Appareil selon la revendication 21, **caractérisé en ce que** la source d'air est un refroidisseur de clinker (58).

24. Appareil selon la revendication 21, **caractérisé en ce qu'**il comprend en outre un moyen pour mélanger l'air provenant de la source d'air et l'oxygène provenant de la source d'oxygène (60).

25. Appareil selon la revendication 21, **caractérisé en ce que** la source d'air est couplée à la source d'oxygène (60) et au dispositif de précalcination (54) par un conduit (55) à travers lequel peut passer de l'air enrichi en oxygène.

26. Appareil selon l'une quelconque des revendications 15 à 25, **caractérisé en ce que**, pour améliorer la combustion dans un système de four à ciment (50), l'appareil comprend :
un moyen pour introduire de l'air tertiaire enrichi avec de l'oxygène dans le dispositif de précalcination (54).

27. Appareil selon l'une quelconque des revendications 15 à 26 utilisé pour la préparation du ciment, **caractérisé en ce que** l'appareil comprend :
un dispositif de préchauffage (52) ;
un dispositif de précalcination (54) couplé au dispositif de préchauffage (52) ;
un four à ciment rotatif (56) couplé au dispositif de précalcination (54) ;
un refroidisseur de clinker (58) couplé au four à ciment rotatif (56) et au dispositif de précalcination (54).

28. Appareil selon la revendication 27 pour préparer du ciment, **caractérisé en ce que** l'appareil comprend :
un moyen pour introduire de l'air enrichi avec de l'oxygène dans le dispositif de précalcination (54) ;
une source d'air primaire.

29. Appareil selon les revendications 27 et 28 utilisé pour la préparation du ciment, **caractérisé en ce que** l'appareil comprend :
un dispositif de préchauffage (52) ;
un dispositif de précalcination (54) couplé au dispositif de préchauffage (52) ;
une source d'oxygène (60) englobant au moins une source choisie parmi le groupe comprenant une source d'oxygène cryogénique et une installation d'absorption par oscillation sous vide ;
un four à ciment rotatif (56) couplé au dispositif de précalcination (54) ;
une source d'air englobant un refroidisseur de clinker (58) couplé au dispositif de précalcination (54) et au four à ciment rotatif (56) ;
un conduit couplant la source d'oxygène au dispositif de précalcination (54) et la source d'air au dispositif de précalcination (54) et au four à ciment rotatif (56).

30. Appareil selon la revendication 29 utilisé pour préparer du ciment, **caractérisé en ce que** l'appareil comprend :
une source d'oxygène (60) couplée au dispositif de précalcination (54).
